(19) Europäisches Patentamt
European Patent Office
Office européen des brevets

(11) **EP 1 990 096 A2**

(12) **EUROPÄISCHE PATENTANMELDUNG**

(43) Veröffentlichungstag:
**12.11.2008 Patentblatt 2008/46**

(51) Int Cl.:
*B03C 3/06* *(2006.01)*          *B03C 3/62* *(2006.01)*

(21) Anmeldenummer: **08450073.5**

(22) Anmeldetag: **09.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.05.2007   AT 7302007**

(71) Anmelder: **Fleck, Carl Maria, Prof. Dr.**
**2391 Kaltenleutgeben (AT)**

(72) Erfinder: **Fleck, Carl Maria, Prof. Dr.**
**2391 Kaltenleutgeben (AT)**

(74) Vertreter: **KLIMENT & HENHAPEL**
**Patentanwälte OG**
**Singerstrasse 8**
**1010 Wien (AT)**

(54) **Offener Absolutfilter**

(57)    Verfahren und Filteranordnung zur Entfernung von Russpartikel aus einem Abgasstrom, bei dem das Abgas durch axial verlaufende Kanäle eines aus einem keramischen Werkstoff hergestellten Wabenfilter hindurchgeleitet wird, und an parallel zu den Kanälen verlaufenden Elektroden unipolare Spannungsimpulse angelegt werden, wobei die unipolaren Spannungsimpulse so gewählt sind, dass bei vorgegebener Kanalhöhe (h) in Feldrichtung und vorgegebener Kanallänge (L) das Verhältnis der durch die Spannungsimpulse erzeugten Driftgeschwindigkeit (c(D)) der aufgeladenen Russpartikel mit Durchmessern größer als $1\mu$m, vorzugsweise mit Durchmessern größer oder gleich $10\mu$m, in Feldrichtung zur Kanalhöhe (h) größer oder gleich dem Verhältnis der Strömungsgeschwindigkeit (v) der Gasströmung in den Kanälen (5) zur Kanallänge (L) ist. Des Weiteren ist vorgesehen, dass die Kanalhöhe (h) größer oder gleich dem Produkt aus der Wandstärke (d) und der Quadratwurzel aus dem Verhältnis von Kanalhöhe (h) zu Kanalbreite (b) ist, aber kleiner oder gleich der Summe aus diesem Produkt und der zweifachen Wandstärke (d).

Fig. 2

## Beschreibung

Die Erfindung betrifft ein Verfahren für den Betrieb einer Filteranordnung zur Abscheidung von Russpartikel aus einem Abgasstrom gemäß dem Oberbegriff von Anspruch 1, und eine Filteranordnung zur Durchführung des Verfahrens nach Anspruch 1 zur Entfernung von Russpartikel aus einem Abgasstrom, insbesondere einer Diesel-Brennkraftmaschine, gemäß dem Oberbegriff von Anspruch 3.

Bei Vorrichtungen dieser Art werden die im Abgasstrom enthaltenen Russpartikel entfernt, indem das Abgas durch axial verlaufende Kanäle eines aus einem keramischen Werkstoff hergestellten Wabenfilter hindurchgeleitet wird, und an parallel zu den Kanälen verlaufenden Elektroden eine Spannung an den Wabenfilter zur Erzeugung eines normal zu den Kanälen verlaufenden, elektrischen Feldes in den Kanälen angelegt wird. Die Kanäle weisen dabei einen rechteckförmigen Querschnitt, der in Spezialfällen auch quadratisch sein kann, auf, wobei als Kanalhöhe "h" jene Seite definiert wird, die in Feldrichtung orientiert ist, und die Kanalbreite "b" folglich im Wesentlichen normal zur Feldrichtung liegt. Die Kanäle sind in Feldrichtung durch eine Wandstärke "d" des keramischen Werkstoffes voneinander getrennt.

Zur prinzipiellen Ausführung des Wabenkörpers sind mehrere Varianten bekannt. So kennt der Stand der Technik etwa Filtersysteme, bei denen die axial verlaufenden Kanäle beidseitig offen sind ("offene Filter"), oder nur an einer Seite offen, und an der gegenüber liegenden Seite geschlossen ("Wall-flow-Filter" oder "geschlossene, Filter"). Bei offenen Filtersystemen werden die Russpartikel mithilfe einer vor dem Wabenkörper angeordneten Entladungselektrode elektrisch aufgeladen, und durch das am Wabenkörper anliegende elektrische Feld abgeschieden. Das elektrische Feld am Wabenkörper kann dabei so betrieben werden, dass innerhalb der Kanäle ein Plasma erzeugt wird, mit dem abgeschiedene Russpartikel in gasförmige Substanzen umgewandelt werden (so genannte "plasmaregenerierte Filtersysteme"). Bei geschlossenen Filtern kann eine vorherige Aufladung der Russpartikel unterbleiben, da die Russpartikel im Zuge des Durchtritts des Abgases durch die Kanalwand in einen daneben liegenden Kanal mit offener Austrittsöffnung zurück gehalten werden. Der keramische Werkstoff ist hierzu porös ausgeführt, um einen Durchtritt des Abgases zu ermöglichen. Bei offenen Systemen wird der keramische Werkstoff im Zuge der Herstellung hingegen "dicht gebrannt", d.h., dass der Porenanteil gering ist, und es sich bei den verbleibenden Poren um geschlossene Poren handelt, also keinen Durchtritt von Abgas von einem Kanal in einen daneben liegenden Kanal ermöglichen. Als Werkstoff für den keramischen Wabenkörper finden in der Regel oxidische Keramiken Anwendung, insbesondere Kordierit.

Der Wabenkörper wird in der Regel entweder als kreisringzylindrischer Körper ausgeführt, in dessen innerem Hohlraum eine erste Elektrode angeordnet ist, zumeist jene mit der Hochspannungszuführung, und an dessen äußerem Umfang eine zweite Elektrode angebracht ist, zumeist jene, die auf Masse liegt, oder mit einer planaren Geometrie, also mit rechteckförmigem Querschnitt, an dessen gegenüber liegenden Seiten die beiden Elektroden angeordnet sind. Wahlweise kann auch eine "Sandwichstruktur" gewählt werden, bei der mehrere Elektrodenflächen den Wabenkörper durchziehen, wobei jeweils benachbarte Elektroden unterschiedliche Polarität aufweisen. Die Länge des Wabenkörpers, also die Erstreckung zwischen Eintrittseite des Abgases in den Wabenkörper und der Austrittsseite, hängt im Wesentlichen von der notwendigen Verweildauer des Abgases im Wabenkörper ab, um einen vorgegebenen Abscheidegrad für die Russpartikel sicher zu stellen. Diese Größe ist wiederum durch den Abgasvolumenstrom im Volllastbetrieb des Fahrzeugs bestimmt, also letztendlich auch von der Fahrzeugtype abhängig. Die notwendige Verweildauer des Abgases in den Kanälen des Wabenkörpers ist selbstverständlich auch vom Abscheideverhalten der Russpartikel abhängig, die etwa durch die angelegte Feldstärke steuerbar ist, aber auch von der strukturellen Ausführung der Kanäle, also von der Wahl von Kanalhöhe und Kanalbreite.

Hinsichtlich der strukturellen Ausführung der Kanäle folgte man bislang aber lediglich der Lieferbarkeit durch die Hersteller von Keramiken, und letztendlich auch dem Kostenargument. Als grundsätzliche Vorgabe galt hierbei, dass ein vorgegebener, maximaler Abgasstrom durch einen ebenfalls vorgegebenen Querschnitt des Wabenkörpers geleitet werden kann. Derzeit übliche Kanalhöhen betragen dabei mindestens 1 mm. Der notwendige Abscheidegrad wurde in weiterer Folge im Wesentlichen durch geeignete Wahl des elektrischen Feldes im Wabenkörper und der Länge des Wabenkörpers gesteuert. Detaillierte Kriterien für die strukturelle Ausführung des Wabenkörpers stehen bislang aber noch nicht zur Verfügung.

Diese bisherigen Filtertechnologien für die Abscheidung von Russpartikel aus den Abgasen von Verbrennungskraftmaschinen stoßen des Weiteren auch durch die sich immer weiter verschärfenden Umweltauflagen an ihre Grenzen. So sorgen etwa die steigenden Beimischungen von Biodiesel zu den Dieselkraftstoffen durch den damit steigenden Phosphatanteil zu einer sinkenden Kilometerleistung der Wall-flow-filter, da durch die hohen Temperaturen bei der Regeneration des Filters eine Ablagerung von Phosphor zu einer raschen Verlegung der Poren führt. Außerdem verursacht der hohe Gegendruck der Wall-flow-filter einen Mehrverbrauch an Dieselkraftstoff, der bei der heutigen Sensibilität gegenüber dem zunehmenden Ausstoß an $CO_2$ nicht mehr unberücksichtigt bleiben kann.

Es ist daher das Ziel der Erfindung, optimierte Verfahren für den Betrieb einer Filteranordnung zur Abscheidung von Russpartikel aus einem Abgasstrom von Verbrennungskraftmaschinen bereit zu stellen, und hierfür verbesserte, strukturelle Ausführungen der Filteranordnung zu liefern. Insbesondere soll eine für eine möglichst hohe Abscheidung von Russpartikel optimale Wahl des am Wabenkörper anliegenden, elektrischen Feldes, sowie für die Höhe der Kanäle eines solchen Wabenkörpers in Abhängigkeit von der Wandstärke und der Kanalbreite vorgeschlagen werden, und zwar bei möglichst kleinem Gesamtquerschnitt des Wabenkörpers, da eine Montage unter dem Fahrzeug, gegebenenfalls auch im Zuge einer Nachrüstung, möglich sein sollte.

Diese Ziele werden durch die Merkmale von Anspruch 1 und 5 verwirklicht. Anspruch 1 bezieht sich dabei auf ein Verfahren für den Betrieb einer Filteranordnung zur Abscheidung von Russpartikel aus einem Abgasstrom, bei dem der Abgasstrom durch axial verlaufende, beidseitig offene Kanäle eines aus einem keramischen Werkstoff hergestellten Wabenfilter hindurchgeleitet wird, wobei an parallel zu den Kanälen verlaufenden Elektroden eine Spannung an den Wabenfilter zur Erzeugung eines elektrischen Feldes in den Kanälen des Wabenfilter, das im Wesentlichen normal zur Achse der Kanäle orientiert ist, angelegt wird, und vor dem Einleiten des Abgasstroms in die Kanäle des Wabenfilter eine Aufladung der Russpartikel mithilfe einer weiteren Elektrodenanordnung erfolgt. Erfindungsgemäß ist hierbei vorgesehen, dass es sich bei jener Spannung, die an den parallel zu den Kanälen verlaufenden Elektroden angelegt wird, um unipolare Spannungsimpulse handelt, wobei die unipolaren Spannungsimpulse so gewählt werden, dass bei vorgegebener Kanalhöhe h in Feldrichtung und vorgegebener Kanallänge L das Verhältnis der durch die Spannungsimpulse erzeugten Driftgeschwindigkeit c(D) der aufgeladenen Russpartikel in Feldrichtung des in den Kanälen erzeugten, elektrischen Feldes zur Kanalhöhe h größer oder gleich dem Verhältnis der mittleren Strömungsgeschwindigkeit v der Gasströmung in den Kanälen zur Kanallänge L ist. Die Driftgeschwindigkeit c(D) der aufgeladenen Russpartikel ist vom Durchmesser D der Russpartikel abhängig.

Die Strömungsgeschwindigkeit v der Gasströmung in den Kanälen sowie die Driftgeschwindigkeit c(D) können dabei leicht bestimmt werden. Die Strömungsgeschwindigkeit v wird im Zuge der Regelung des Filters ohnehin gemessen, um die angelegte Spannung zu regeln. Die Driftgeschwindigkeit c(D) der Russpartikel mit Durchmesser D ergibt sich wiederum aus der Beweglichkeit k(D), der Ladungszahl z(D) und der Feldstärke E senkrecht auf die Kanalachse, wobei letztere durch die unipolaren Spannungsimpulse gegeben ist, sodass sich für die Driftgeschwindigkeit c(D) für Russteilchen mit dem Durchmesser D ergibt:

$$c(D) \ = \ \kappa(D).z(D).E$$

Die Beweglichkeit k(D) und die Ladungszahl z(D) können für unterschiedliche Durchmesser D aus hinlänglich bekannten Tabellen abgelesen werden. Die durch die Ladungszahl z(D) quantifizierte Aufladung der Russpartikel ist durch die vorherige Aufladung mittels der Entladungselektrode bedingt. Die Feldstärke E ist in bekannter Weise direkt durch die angelegten Spannungsimpulse gegeben. Anhand der erfindungsgemäßen Merkmale kann somit die im jeweiligen Anwendungsfall notwendige Feldstärke, und somit die an die Elektroden anzulegende Spannung, abgeleitet werden.

Mit der erfindungsgemäßen Maßnahme, das elektrische Feld so einzustellen, dass die Bedingung

$$c(d)/h \ \geq \ v/L$$

erfüllt ist, "schließt" gewissermaßen das elektrische Feld den Filter, und es können theoretisch bis zu 100% der Russpartikel abgeschieden werden. Bei Sättigungsaufladung gilt das Gleichheitszeichen, weicht die Aufladung von ihrer möglichen Sättigung ab, so gilt das "größer"-Zeichen.

Das elektrische Feld kann aber auch nur für jene Russpartikel "geschlossen" werden, die den größten Teil der Partikelmasse ausmachen; von der verbleibenden Russmasse wird dann ebenfalls ein erheblicher Anteil abgeschieden, sodass der Filterwirkungsgrad dieses offenen Filters noch immer im Bereich der thermisch regenerierten wall-flow-Filter liegt, deren Wirkungsgrad sich durch eine anteilsmäßige Einbeziehung der Regenerationsphasen zwischen 95% und 98% bewegt.

Gemäß Anspruch 2 ist vorgesehen, dass für die Bestimmung der durch die Spannungsimpulse erzeugten Driftgeschwindigkeit (c) der aufgeladenen Russpartikel nur jene Russpartikel mit Durchmessern über $1 \mu m$ herangezogen werden, und gemäß Anspruch 3 nur jene Russpartikel mit Durchmessern größer oder gleich $10 \mu m$.

Die erfindungsgemäß vorgesehene Filteranordnung für Russpartikel aus den Abgasen von Verbrennungskraftmaschinen mit einer Abscheidung der elektrisch aufgeladenen Russpartikel in einem Wabenkörper mit beidseitig offenen Kanälen, in denen durch an zwei gegenüber liegenden Begrenzungen des Wabenkörpers angeordnete Elektroden ein elektrisches Feld aufgespannt ist, hat gegenüber einem geschlossenen Wabenfilter, also dem "Wall-flow-filter", wesentliche Vorteile:

-) Gelingt es, den Querschnitt des Wabenkörpers groß genug zu halten, kann der Abscheidegrad bei vollkommener Aufladung theoretisch bis zu 100% erreichen, und liegt auch bei realistischen Anordnungen über 95%. Damit ist dieser Filtertyp besser oder vergleichbar mit herkömmlichen Wall-flow-Filtern.

-) Der Filter hat eine nahezu unbegrenzte Zeitstandsfestigkeit, da es kein Zusetzen der Filterporen in den Wänden der Kanäle mit Ölasche und anderen festen Verbrennungsrückständen, und damit auch keinen irreversiblen Druckaufbau gibt.

-) Der offene Wabenkörper eines solchen Filters ruft durch den fehlenden Gegendruck keinen Mehrverbrauch hervor, was insbesondere für Dieselfahrzeuge ein starkes Argument darstellt.

-) Der Filter kann auch an der Stelle des Schalldämpfers angeordnet werden, um Platz für herkömmliche Systeme zur Entstickung, wie etwa Harnstoff-Einspritzung (blue-tec) und dergleichen zu schaffen.

-) Durch den offenen Wabenkörper ist der Filter auch in jenen seltenen Fällen höchst zuverlässig (so genanntes "coming home device"), in denen extreme Betriebsweisen oder tiefe Temperaturen eine Regeneration des Wabenkörpers bei heutigen Filtertechnologien verhindern.

Das erfindungsgemäße Verfahren zeigt, dass für eine optimale Abscheidung die Wahl der angelegten Feldstärke E, also der angelegten Spannungsimpulse, auf die Kanalhöhe h abzustimmen ist. Es ist daher auch auf die geometrische Auslegung des Wabenkörpers Rücksicht zu nehmen. Dabei kann zunächst vom freien Strömungsquerschnitt q, der eine Abscheidung bis zu 100% ermöglichen soll, ausgegangen werden. Bei vorgegebener Länge L des Wabenkörpers bzw. der Kanäle, maximal möglichem Abscheidefeld $E_{max}$ und bei bekanntem, maximalen Abgasvolumenstrom $V_{max}$ bei Volllast des Motors ergibt sich für den notwendigen freien Querschnitt q:

$$q \quad = \quad V_{max} . h / E_{max} . L . \kappa(D) . z(D)$$

Mit der Wahl von D für k(D).z(D) kann der benötigte, freie Strömungsquerschnitt q des Wabenkörpers, mit dem bei Volllast bis zu 100% der Partikel bis zum Partikeldurchmesser D abgeschieden werden, ermittelt werden. Auch diese Überlegung zeigt, dass sich der freie Querschnitt q direkt proportional mit der Kanalhöhe h ändert. Bei kleinerer Baugröße ist daher eine möglichst kleine Kanalhöhe h anzustreben. Andererseits kann die Wandstärke d des Wabenkörpers nicht beliebig klein gemacht werden, sodass mit den enger werdenden Kanälen immer mehr freier Strömungsquerschnitt q dadurch verloren geht, dass immer mehr Wände benötigt werden, um die wachsende Zahl von Kanälen zu verpacken. Daher wird die Strömungsgeschwindigkeit v des Abgasstroms bei vorgegebenem Gesamtquerschnitt des Wabenfilters in den Kanälen immer höher.

Es ist daher erfindungsgemäß auch die Angabe einer optimalen Geometrie notwendig. Besonders wichtig ist die Ermittlung einer optimalen Geometrie des Wabenkörpers, mit dem das erfindungsgemäße Verfahren erfüllt werden kann, oder zumindest möglichst gut erfüllt werden kann, wenn zugleich eine möglichst hohe Abscheidung des Rußes bei gleichzeitig möglichst kleinem Gesamtquerschnitt des Wabenkörpers verlangt wird, da eine Montage an jeder Ort unter dem Fahrzeug, gegebenenfalls auch eine Nachrüstung möglich sein sollte.

Erfindungsgemäß wird dieses Problem mit den Merkmalen von Anspruch 5 gelöst. Anspruch 5 bezieht sich auf eine Filteranordnung mit einem aus einem keramischen Werkstoff hergestellten Wabenfilter, der axial verlaufende Kanäle aufweist, die vom Abgas durchströmt werden, und am Wabenfilter parallel zu den Kanälen verlaufende Elektroden zur Erzeugung eines normal zu den Kanälen verlaufenden, elektrischen Feldes in den Kanälen angeordnet sind, wobei die Kanäle einen rechteckförmigen Querschnitt mit einer Kanalhöhe h in Feldrichtung des in den Kanälen erzeugten, elektrischen Feldes, und einer Kanalbreite b aufweisen, und die Kanäle in Feldrichtung durch eine Wandstärke d voneinander getrennt sind. Erfindungsgemäß ist hierbei vorgesehen, dass die Kanalhöhe h größer oder gleich dem Produkt aus der Wandstärke d und der Quadratwurzel aus dem Verhältnis von Kanalhöhe h zu Kanalbreite b ist, aber kleiner oder gleich der Summe aus diesem Produkt und der zweifachen Wandstärke d.

Für das Verhältnis von Kanalhöhe h zu Kanalbreite b wird gemäß Anspruch 6 vorzugsweise ein Wert zwischen 0.14 und 1.0 gewählt. Gemäß Anspruch 7 beträgt dieser Wert zwischen 0.20 und 0.50.

Gemäß Anspruch 8 beträgt die Kanalhöhe vorzugsweise zwischen 0.20 mm und 0.80 mm, und gemäß Anspruch 9 zwischen 0.40 mm und 0.60 mm.

Eine weitere Schwierigkeit bei der Annäherung an die optimale Kanalhöhe h und den dadurch möglichen Abscheidegraden zwischen 90% und 100% ergibt sich aus den sehr unterschiedlichen Betriebszuständen eines Verbrennungsmotors im Pkw. Es wird daher gemäß Anspruch 4 eine Regelung in Zusammenhang mit dem erfindungsgemäßen Verfahren vorgeschlagen, bei dem der Differenzdruck des Abgasstromes am Wabenfilter gemessen wird, und oberhalb eines vorgegebenen Wertes des Differenzdrucks die Regelung der unipolaren Spannungsimpulse in Abhängigkeit von der Strömungsgeschwindigkeit des Abgasstroms in den Kanälen des Wabenfilter erfolgt, und unterhalb dieses vorgegebenen Wertes die Regelung nur dann in Abhängigkeit von der Strömungsgeschwindigkeit des Abgasstroms in den Kanälen des Wabenfilter erfolgt, wenn die Strömungsgeschwindigkeit eine mit der Zeit zunehmende Tendenz aufweist, und andernfalls die Regelung unabhängig von der Strömungsgeschwindigkeit erfolgt.

Die Erfindung wird im Folgenden anhand der beiliegenden Figuren näher erläutert. Hierbei zeigen die

Fig. 1 eine schematische Darstellung eines Querschnitts eines Keramikkörpers zur Entfernung von Russpartikel aus einem Abgasstrom,

Fig. 2 eine Detailansicht von Fig. 1, wobei insbesondere die Anordnung der Kanäle ersichtlich ist,

Fig. 3 zeigt eine Darstellung des Abscheidegrads vs. Kanalhöhe bei einem Abgasmassenstrom von 500 kg/h bei 500°C und einem gesamten, freien Querschnitt von 360 cm$^2$, wobei der sich mit kleinerer Kanalhöhe h verringernde Russdurchsatz ersichtlich ist, und die untere Kurve bei einem Abscheidefeld von 4 kV/cm gemessen wurde, und die obere Kurve bei einem Abscheidefeld von 3 kV/cm, und

Fig. 4 eine Darstellung zur Erläuterung der Regelung der Spannungsimpulse im Zuge des erfindungsgemäßen Verfahrens.

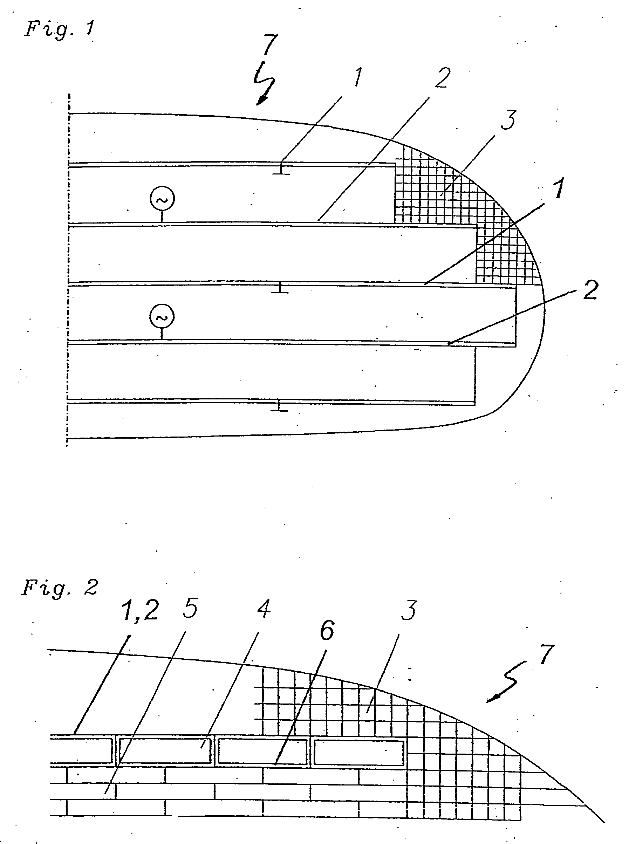

Die Fig. 1 und 2 zeigen jeweils eine schematische Darstellung eines Querschnitts eines Keramikkörpers 7, bei dem es sich um einen Wabenkörper handelt. Dabei ist jeweils ein Keramikkörper 7 mit konvexer, nämlich elliptischer Umfangslinie dargestellt, er könnte aber auch andere Querschnittsformen aufweisen, etwa eine Trapezform. Der Keramikkörper 7 weist Kanäle 5 auf, die in Längsrichtung des Keramikkörpers 7 verlaufen, und beidseitig offen sind.

Gemäß der Ausführungsform der Fig. 1 und 2 werden die Elektroden 1,2 jeweils durch eine Gruppe von Elektrodenkanälen 4, in denen jeweils zumindest teilweise entlang ihrer axialen Erstreckung eine elektrische Beschichtung 6 eingebracht ist, gebildet. Wie insbesondere aus der Fig. 2 ersichtlich ist, werden die Gruppen von Elektrodenkanälen 4 jeweils durch nebeneinander liegende Elektrodenkanälen 4 gebildet, sodass durch jede Gruppe von Elektrodenkanälen 4 eine ebene Elektrodenfläche 1,2 definiert wird. Es sind aber auch andere Ausführungen der Elektroden möglich.

Wie aus der Fig. 1 ersichtlich ist, verlaufen die ebenen Elektrodenflächen 1,2 jeweils horizontal und parallel zueinander. Der Abstand zweier benachbarter Elektrodenflächen 1 und 2 beträgt vorzugsweise weniger als 40 mm, etwa 15-25 mm. Dadurch kann zwischen den Elektrodenflächen 1 und 2 ein homogenes elektrisches Feld sichergestellt werden, und zwar insbesondere in jenen Raumbereichen, die sich innerhalb des von jeweils zwei benachbarten Elektrodenflächen 1,2 begrenzten Raumbereiches des Keramikkörpers 7 befinden, der im folgenden auch als homogener Feldbereich bezeichnet wird. Der außerhalb des homogenen Feldbereiches liegende Bereich 3 des Keramikkörpers 7 verfügt in der Ausführungsform gemäß der Fig. 1 und 2 über eine dichtere Struktur, um deren strukturelle Belastbarkeit zusätzlich zu erhöhen.

Zwei benachbarte Elektrodenflächen 1 und 2 sind jeweils gegenpolig kontaktiert, wobei in der Fig. 1 etwa die Elektrodenfläche 1 geerdet ist, und die Elektrodenfläche 2 mit unipolaren Spannungsimpulsen versorgt wird.

Im Folgenden wird nun das erfindungsgemäße Verfahren näher erläutert. Der ungünstigste Fall für die Abscheidung eines Russpartikels ist dann gegeben, wenn ein Russpartikel in unmittelbarer Nähe zu einer Wand eines Kanals 5 in den Wabenkörper 7 eintritt, aber auf der gegenüberliegenden Wand dieses Kanals 5 abgeschieden werden soll. Während also das Abgas den Kanal 5 des Wabenkörpers 7 der Länge L mit der Strömungsgeschwindigkeit v durchströmt, muss sich das geladene Russteilchen unter dem elektrischen Feld E mit der Driftgeschwindigkeit c in Richtung der gegenüberliegenden Wand bewegen, und sie vor dem Austritt des Abgases aus dem Kanal 5 erreichen. Dazu hat das Teilchen die Zeit t, die es sich im Kanal aufhält:

$$t = L/v$$

Da das Teilchen in dieser Zeit mindestens die Kanalhöhe h zurücklegen muss, ergibt sich bei vorgegebener Driftgeschwindigkeit c(D) mit der Beweglichkeit k(D), der Ladungszahl z(D), die alle von dem Durchmesser D des Russteilchens abhängen, und der Feldstärke E senkrecht auf die Kanalachse die Driftgeschwindigkeit c für Russteilchen mit dem Durchmesser D:

$$c(D) = \kappa(D).z(D).E$$

Als untere Abschätzung für eine vollkommene Abscheidung im Wabenkörper 7 ergibt sich daher die Beziehung

$$t.c(D) \geq h$$

oder

$$\kappa(D).z(D).E \geq h.v/L$$

oder

$$\kappa(D).z(D).E/h \geq v/L$$

Erfindungsgemäß muss daher das Verhältnis der Driftgeschwindigkeit $c(D)$ aller aufgeladenen Russteilchen mit dem Durchmesser $D$ zur Kanalhöhe $h$ also größer sein, als das Verhältnis der mittleren Geschwindigkeit $v$ des Abgases zur Kanallänge $L$.

Tabelle 1 zeigt den spektralen Durchlass bei verschiedenen Partikeldurchmessern $D$ für einen realistischen Fall. Ein Gesamtquerschnitt $Q$ des Wabenkörpers 7 von 360 cm$^2$ mit einer Kanalhöhe $h$ von 0,6 mm und einer Kanalbreite $b$ von 3 mm muss mit einem mittleren Abscheidefeld $E$ von 3 kV/cm einen Abgasmassenstrom von 500 kg/h bei einer Abgastemperatur 500°C bewältigen. Das erfindungsgemäße Verfahrensmerkmal lautet dazu in etwas anderer Form

$$\kappa(D).z(D).E.L/h.v \geq 1$$

Diese Bedingung muss erfüllt sein, wenn 100% aller Russpartikel in dem offenen Filter mit einer Länge von $L$ = 250 mm und der Kanalhöhe von $h$ = 0,6 mm mit einem Feld von 3 kV/cm abgeschieden werden sollen. Die Tabelle 1 zeigt, dass die Bedingung nur für die Partikelgröße mit dem Durchmesser $D$ = 100 nm verletzt wird, der nicht mehr zur Partikelzahl und noch nicht zur Partikelmasse des Abgases relevant ist.

Tabelle 1:

| D | $\kappa(D).z(D).E$ (E = 3 kV/cm) | $\kappa(D).z(D).E/h$ (h = 0,6 mm) | $\kappa(D).z(D).E.L/h.v$ ($\geq$ 1) | Spektraler Durchlass |
|---|---|---|---|---|
| 10 nm | 5,7 cm/s | 95 | 1,56 | 0% |
| 20 nm | 3,9 cm/s | 65 | 1,07 | 0% |
| 100 nm | 3,0 cm/s | 50 | 0,82 | 18% |
| 1 $\mu$m | 4,8 cm/s | 80 | 1,31 | 0% |
| 10 $\mu$m | 18,0 cm/s | 300 | 4,92 | 0% |

Aus der Tabelle 1 lässt sich ferner ablesen, dass die Größe $\kappa(D).z(D).E.L/h.v$ größer oder gleich 1 sein muss, um eine quantitative Abscheidung des Rußes im Wabenkörper 7 zu erzielen. Der spektrale Durchlass ist effektiv und bezieht sich nur auf die Teilchenzahl der Partikel mit der angegebenen Größe.

Erfindungsgemäß ist es daher sinnvoll, das elektrische Feld nur für Russpartikel jener Größe zu "schließen", die den größten Teil der Partikelmasse ausmacht. In Tabelle 2 sind das Partikel mit einem Durchmesser größer oder gleich 1 $\mu$m, die bei einer

Tabelle 2

| Partikel-Durchmesser D | relative Partikelzahlen 50 km/h | relative Partikelgewichte 50 km/h | $\kappa$d.z(d).E (E = 4 kV/cm) | normiertes spektrales Russgew. 50 km/h |
|---|---|---|---|---|
| 10 nm | 7.10exp.2 | $\approx 0$ | 7,6 cm/s | 0 |
| 20 nm | 1.10exp.2 | $\approx 0$ | 5,2 cm/s | 0 |
| 100 nm | 3.10exp.5 | 3.10exp.2 | 4,0 cm/s | 0,001 |
| 1 $\mu$m | 7.10exp.3 | 7.10exp.3 | 6,4 cm/s | 0,023 |
| 10 $\mu$m | 3.10exp.2 | 3.10exp.5 | 24,0 cm/s | 0,976 |

Fahrgeschwindigkeit eines Mittelklassewagens von 50 km/h zusammen 99,9% des emittierten Russgewichtes ausmachen. Also daher

$$\kappa(1\mu m).z(1\mu m).E.L/h.v \geq 1$$

In Tabelle 3 werden die entsprechenden Werte für eine Fahrgeschwindigkeit von 120 km/h gezeigt. Es zeigt sich, dass bei

Tabelle 3

| Partikel-Durchmesser D | Relative Partikelzahlen 120 km/h | Relative Partikelgewichte 120 km/h | $\kappa$(d).Z(d).E (E = 4 kV/cm) | normiertes spektrales Russgew. 120 km/h |
|---|---|---|---|---|
| 10 nm | 7.10exp.4 | 0 | 7,6 cm/s | 0 |
| 20 nm | 1.10exp.2 | 0 | 5,2 cm/s | 0 |
| 100 nm | 3.10exp.6 | 3.10exp.3 | 4,0 cm/s | 0,100 |
| 1 $\mu$m | 1.10exp.3 | 1.10exp.3 | 6,4 cm/s | 0,033 |
| 10 $\mu$m | 3.10exp.1 | 3.10exp.4 | 24,0 cm/s | 0,867 |

dieser Geschwindigkeit durch das elektrische "Schließen" des Filters bei Partikeln größer oder gleich 1 $\mu$m nur mehr 90% der Masse vollständig abgeschieden werden, von den verbleibenden 10% werden je nach Filtergeometrie aber auch 94% bis 99% abgeschieden, was einen massenbezogenen gesamten Abscheidegrad von 99,5% bis 99,8% ergibt. Schließt man den Filter elektrisch nur für Partikel ab 10 $\mu$m, d.h.

$$\kappa(10\mu m).z(10\mu m).E.L/h.v \geq 1$$

erhält man für 86,7% der Russmasse vollkommene Abscheidung,

Tabelle 4

| Partikel-Durchmesser D | spektraler Durchlass | gewichtetes spektrales normiertes Russgew. 120 km/h | gewichteter spektraler Durchlass 120 km/h | gewichteter spektraler Abscheidegrad |
|---|---|---|---|---|
| 10 nm | 22% | ≈ 0 | - | - |
| 20 nm | 50% | ≈ 0 | - | - |
| 100 nm | 59% | 0,1 | 5,9% | 94,1% |
| 1 μm | 35% | 0,033 | 1,2% | 98,8% |
| 10 μm | 0% | 0,867 | 0 | 100% |

während von 13,3% Restmasse nach Tabelle 4 von den Partikeln mit 1 μm 0,014% und von den Partikeln mit 100 nm 0,35% erhalten bleiben, also zusammen etwa 0,36% durchgelassen werden, was einen gesamten massebezogenen Abscheidegrad von 99,64% ergibt.

Die Partikel unter 100 nm, die nichts zum Russgewicht beitragen aber wegen ihrer großen Zahl trotzdem ökologisch bedenklich sind, werden in einer extrem starken Turbulenz an der Entladungselektrode selbst unter Ionenbeschuss agglomeriert. Diese "elektro-turbulente Agglomeration" verschiebt die Verteilung der Partikelgrößen so deutlich in den Bereich zwischen 1 μm und 10 μm, dass durch diese beiden Partikelklassen bereits auch der größte Teil der Nanopartikel abgeschieden wird.

Da die Abscheidung im Wabenkörper in einem quasi-homogenen, elektrischen Feld E, das hier auch als Abscheidefeld E bezeichnet wird, stattfindet, soll die Kanalhöhe h des Wabenkörpers 7 möglichst klein gehalten werden. Andererseits kann die Wandstärke d des Wabenkörpers 7, wie bereits erwähnt wurde, nicht beliebig klein gemacht werden, sodass mit den enger werdenden Kanälen 5 bei gleich bleibendem Gesamtquerschnitt Q des Wabenkörpers 7 der freie Strömungsquerschnitt q durch alle Kanäle 5 des Wabenkörpers 7 immer kleiner wird, und die Strömungsgeschwindigkeit v in dem verbleibenden Querschnitt immer höher.

Es ist daher die Wahl einer optimalen Geometrie notwendig, die nicht nur die Begrenzungen der praktischen Herstellbarkeit berücksichtigt, sondern auch die Abscheidung des Rußes begünstigt. Besonders wichtig ist die Ermittlung einer optimalen Geometrie des Wabenkörpers 7, wenn eine möglichst hohe Abscheidung des Rußes bei gleichzeitig möglichst kleinem Gesamtquerschnitt des Wabenkörpers 7 verlangt wird, da eine Montage an jedem Ort unter dem Fahrzeug, gegebenenfalls auch im Zuge einer Nachrüstung, möglich sein sollte.

Da, wie erwähnt, die Abscheidung in dem Wabenkörper 7 in einem quasi-homogenen elektrischen Feld stattfindet, soll die Ausdehnung der einzelnen Kanäle 5 in Feldrichtung, also die Kanalhöhe h, möglichst klein gehalten werden. Um den Strömungswiderstand trotzdem klein zu halten, und um eine "Ziegelmauerstruktur" gut ausbilden zu können, bei der in Feldrichtung benachbarte Kanäle 5 jeweils gegeneinander versetzt angeordnet sind, soll die Ausdehnung der Kanäle 5 normal zur Feldrichtung, also die Kanalbreite b, möglichst groß sein, ohne die Struktur des Wabenkörpers 7 zu sehr zu schwächen.

Andererseits ist die Wandstärke d des Wabenkörpers 7 durch die verfügbare Technologie des Herstellers nach unten begrenzt. Damit ergibt sich das Problem, dass eine kontinuierliche Reduzierung der Kanalhöhe h in Feldrichtung zwar einerseits eine immer besser werdende Abscheidung und immer höhere, laminare Strömungsgeschwindigkeiten v in den Kanälen 5 ermöglicht, aber andererseits bei vorgegebenem Platz für den gesamten Filterquerschnitt Q der freie Strömungsquerschnitt q durch alle Kanäle 5 des Wabenkörpers 7 immer geringer wird. Damit erhöht sich aber auch die Strömungsgeschwindigkeit v des Abgases im Kanal 5, und reduziert wiederum die Zeit zur Abscheidung der Russteilchen im Kanal 5.

Der freie Strömungsquerschnittes q könnte zwar durch eine Erhöhung der Kanalbreite b verringert werden, allerdings nimmt bei zunehmend größerer Kanalbreite b auch die Stabilität des Wabenkörpers 7, im Besonderen auch während des Brennvorganges der Keramik, ab. Diese praktische Verknüpfung von Kanalhöhe h und Kanalbreite b wird daher erfindungsgemäß durch einen Geometriefaktor β berücksichtigt, der durch das Verhältnis von Kanalhöhe h zu Kanalbreite b gegeben ist:

$$\beta = h/b$$

Erfindungsgemäß wird nun vorgeschlagen, dass die optimale Kanalhöhe $h_{opt}$ proportional zur Wandstärke d multipliziert mit der Quadratwurzel aus dem Geometriefaktor β der einzelnen Kanäle $(h/b)^{1/2}$ sein soll, also

$$h_{opt} \quad \rightarrow \quad d.(h/b)^{1/2}$$

Praktische Versuche des Anmelders zeigen, dass für die Stabilität des Wabenkörpers 7 Werte des Geometriefaktors h/b zwischen 0,14 und 1,0 besonders günstig sind, und vorzugsweise zwischen 0,20 und 0,50 beträgt. Diese Wahl ist besonders dann vorteilhaft, wenn die Kanalreihen mit gleichem Elektrodenabstand immer gegen die nächstliegenden Reihen mit gleichem Elektrodenabstand um ihre halbe Kanalbreite b versetzt angeordnet sind ("Ziegelmauer-Struktur").

Die Tabelle 2 gibt für verschiedene Wandstärken d und Geometriefaktoren (h/b) die optimalen Kanalhöhen $h_{opt}$ wieder:

Tabelle 2:

| h/b | 1 | 0,5 | 0,33 | 0,25 | 0,20 | 0,17 | 0,14 |
|---|---|---|---|---|---|---|---|
| $(h/h)^{1/2}$ | 1 | 0,71 | 0,58 | 0,50 | 0,45 | 0,41 | 0,38 |
| d = 0,30 | 0,3 mm | 0,21 | 0,17 | 0,15 | 0,14 | 0,12 | 0,11 |
| d = 0,25 | 0,25 | 0,18 | 0,15 | 0,13 | 0,11 | 0,10 | 0,095 |
| d = 0,20 | 0,20 | 0,14 | 0,12 | 0,10 | 0,090 | 0,082 | 0,076 |

Die Tabelle 2 zeigt die für die beste Abscheidung bzw. kleinste Baugröße der Filteranordnung optimalen Kanalhöhen $h_{opt}$. Allerdings sind für die Wahl der Kanalhöhe h auch noch andere Faktoren zu berücksichtigen, die sich insbesondere aus dem praktischen Herstellungsprozess der Keramik ergeben:

Berücksichtigt man etwa die Techniken bezüglich der Herstellung der Extrusionswerkzeuge, der Extrusion der Keramik und des Brennvorganges, so sind die Wandstärken d in ihrer praktischen Herstellbarkeit zwischen 0,2 mm und 0,3 mm begrenzt, nur für ganz feine Strukturen mit geringer Kanalbreite b kann die Wandstärke d bis etwa 0,15 mm reduziert werden. Eine weitere Grenze der Machbarkeit eines erfindungsgemäßen Wabenkörpers besteht des Weiteren in der Begrenzung der Feinheit des formgebenden Teils des Extrusionswerkzeuges, das die Kanäle 5 des austretenden Wabenkörpers 7 bestimmt. Hier scheint die Grenze der Machbarkeit noch nicht erreicht zu sein, sie dürfte aber bei etwa 0,2 mm liegen. Letztendlich ist auch die Größe der Russpartikel ein Kriterium für die Kanalhöhe h, da diese durch größere Partikel verstopft werden können. Wird der Filter möglichst motornahe angeordnet, sind kaum Schwierigkeiten zu befürchten. Bei größerer Entfernung zum Motor dagegen können Russausbrüche aus dem Katalysator und Abblättern des an den Wänden des Abgasstranges angelegten Rußes bei Kanalhöhen h unter 0,2 mm aber durchaus Schwierigkeiten bereiten.

Erfindungsgemäß wird daher vorgeschlagen, dass die optimale Kanalhöhe $h_{opt}$ größer oder gleich der Wandstärke d multipliziert mit der Quadratwurzel aus dem Geometriefaktor (h/b) sein soll, und kleiner gleich der Wandstärke d multipliziert mit der Quadratwurzel aus dem Geometriefaktor (h/b) vermehrt um das Zweifache eben diese Wandstärke d, also

$$d.(h/b)^{1/2} + 2.d \quad \geq \quad h_{opt} \quad \geq \quad d.(h/b)^{1/2}$$

Erfindungsgemäß ergeben sich somit Kanalhöhen h, die sich zwischen 0,2 mm und 0,8 mm bewegen, vorzugsweise jedoch zwischen 0,4 mm und 0,6 mm.

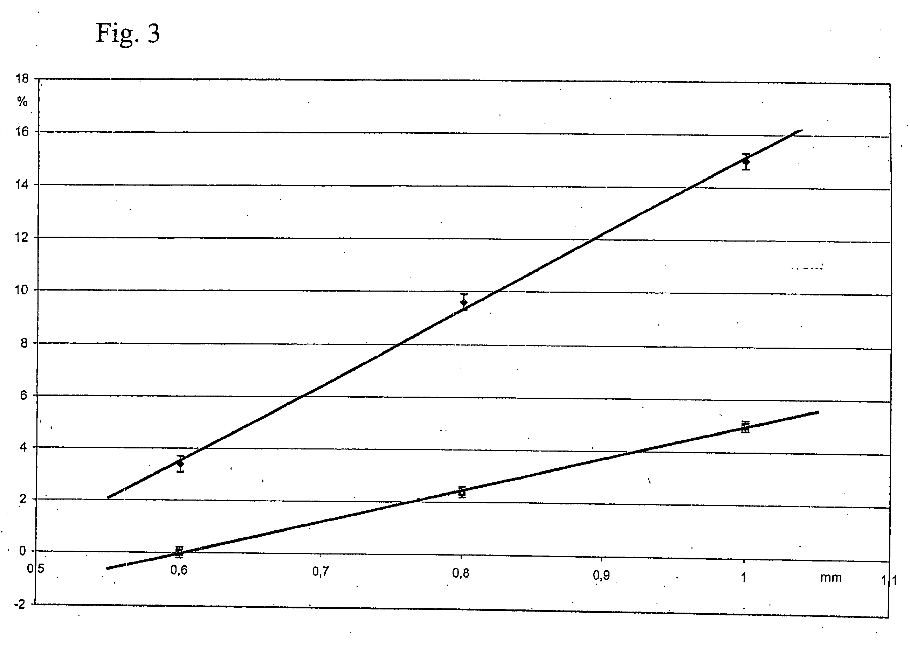

Fig.3 zeigt den sich mit kleinerer Kanalhöhe verringernden Durchsatz des Rußes für einen erfindungsgemäßen Wabenfilter 7 mit 360 cm$^2$ Gesamtquerschnitt, der einem Abgasmassenstrom von 500 kg/h bei 500°C ausgesetzt wird. Das mittlere Abscheidefeld E beträgt 3 kV/cm bzw. 4 kV/cm. Für diesen Massestrom erreicht man bei einer Kanalhöhe h von 0,6 mm und einem Abscheidefeld E von 4 kV/cm bereits 100% Abscheidung aller Russpartikel.

Eine weitere Schwierigkeit bei der Annäherung an die optimale Kanalhöhe und den dadurch möglichen Abscheidegraden zwischen 90% und 100% liegt in den mitunter sehr unterschiedlichen Betriebszuständen eines Verbrennungsmotors. Wird der Filter auf eine möglichst hohe, vorzugsweise vollkommene Abscheidung im Volllastbereich ausgelegt, findet die Abscheidung im Niedriglastbereich bereits im Einlaufteil des Wabenkörpers 7 statt. Diese Schwierigkeit wird durch die sehr oft gewünschte Übermotorisierung besonders verschärft. Bei einem Mittelklassewagen, der von einem Dieselmotor mit 200 PS angetrieben wird, besteht sehr selten die Gelegenheit, diese Leistung über längere Zeit abzurufen. Statt einem Massenstrom von etwa 500 kg/h wird das Fahrzeug im Stadtverkehr 100 kg/h selten überschreiten, was mit dem entsprechenden Temperaturunterschied zwischen Volllast und Teillast ein Verhältnis der Abgasvolumenströme von etwa 1:10 ergibt. Damit findet die Abscheidung des gesamten Rußes im Stadtverkehr in den ersten 10% der Länge des Wabenkörpers 7 statt. Da aber die Stärke der kontinuierlich laufenden Regeneration des Filters durch das in den Kanälen 5 ausgelöste, unipolare Plasma dann am größten ist, wenn sich der Russ über das ganze Filtervolumen verteilt, kann es im Niedriglastbereich zu Schwierigkeiten kommen, die bis zu einer Unterbrechung der Regeneration und anschließenden Blockade der Kanäle 5 führen können.

Diese Schwierigkeiten können dadurch behoben werden, indem die Abscheidefeldstärke E proportional zu dem Abgasmassenstrom M bzw. dem Abgasvolumenstrom V geregelt wird, und diese Regelung vorzugsweise nur über ein Intervall des Abscheidefeldes E und/oder des Abgasmassenstromes M erfolgt. Bei dieser Regelung ist es sehr sinnvoll, die bei höheren Temperaturen T auch höhere Beweglichkeit k(D,T) der Russpartikel zu berücksichtigen. Mit dem gesamten freien Querschnitt q aller Kanäle 5 und der Beziehung mit dem Massenvolumenstrom V = q.v und der mittleren Gasgeschwindigkeit v in den Kanälen 5 ergibt sich aus der Beziehung

$$\kappa(D,T).z(D).E.L/h.v \geq 1$$

im Falle des Gleichheitszeichens eine Regelgleichung zwischen der Abscheidefeldstärke E und dem temperaturabhängigen Volumenstrom V(T) = q.v(T):

$$E(T) = h.V(T) / q.L.\kappa(D,T).z(D)$$

Wird das kleinste Produkt aus Beweglichkeit K(D) und Ladungszahl z(D) eingesetzt, das gemäß Tabelle 1 bei einem Partikeldurchmesser D von 100 nm gegeben ist, so werden Partikel dieser Größe bei exakter Erfüllung der Regelgleichung gerade noch am Ende des Kanals 5 abgeschieden.

Wenn nun das Abscheidefeld E mit dem Gasvolumenstrom V und der vorzugsweisen Temperaturkorrektur V(T)/κ(D,T) geregelt wird, ergibt sich die weitere Schwierigkeit, dass bei geringerer werdender Abscheidefeldstärke E auch die Plasmatemperatur, und damit die Regenerationsgeschwindigkeit, geringer wird und letztendlich die Konversion des Rußes in gasförmige Bestandteile ganz erlischt. Bei tiefen Temperaturen und hohem Russanfall darf das Abscheidefeld E daher erfindungsgemäß nicht unter eine vorgegebene Schranke geregelt werden. Besonders gravierend wird dieses Problem bei kurzen Volllastbeschleunigungen mit einem durch längeren Teillastbetrieb kalten Motor.

Dieses Problem kann dadurch gelöst werden, indem bei hohem Russanfall ein entsprechend hohes Abscheidefeld E gesetzt wird, bei geringem Russanfall aber je nach Regenerationszustand des Filters zwischen einem hohen Feld und geringem Feld gewechselt wird, wobei vorzugsweise zu diesem Wechsel die Daten "hoher Russanfall" und "geringer Russanfall" sowie Gasmassenstrom aus dem Motorrechner über einen CANBUS an den Prozessor des Filters übertragen werden, oder der Wechsel wird direkt aus dem Motorrechner gesteuert, der dann Russmenge und Russverteilung im Filter selbst berechnet.

Ist v die mittlere Strömungsgeschwindigkeit des Abgases in den Kanälen 5 des Wabenkörpers 7, die natürlich dem Gasvolumenstrom proportional ist, so ergibt sich ein vorteilhaftes Regelprinzip dadurch, dass man die Strömungsgeschwindigkeit v in mindestens zwei Intervalle teilt, wo für die größere Strömungsgeschwindigkeit v die normale Regelgleichung gilt, während für die geringere Strömungsgeschwindigkeit v nur dann die normale Regelgleichung gilt, wenn die Ableitung der Strömungsgeschwindigkeit v nach der Zeit positiv oder nahe Null ist, also die Strömungsgeschwindigkeit v mit der Zeit zunimmt oder konstant bleibt; ist dagegen die Ableitung der Strömungsgeschwindigkeit v nach der Zeit negativ, nimmt also die Strömungsgeschwindigkeit v mit der Zeit ab, so wird das Feld E mit dem höchsten, unter den Nebenbedingungen von Plasmastrom und Temperatur erlaubten Wert $E_{max}$ gefahren:

**Intervall I:**
$v > v_1$ Regelgleichung lautet E(T) = h.V(T) / q.L.κ(D,T).z(D)

**Intervall II**:

**v < v$_1$** Regelgleichung lautet mit **dv/dt $\geq$ 0** ebenfalls

$$E(T) = h.V(T) / q.L.\kappa(D,T).z(D)$$

**v < v$_1$** Regelgleichung lautet mit **dv/dt < 0** dagegen

$$E(T) = E_{max}$$

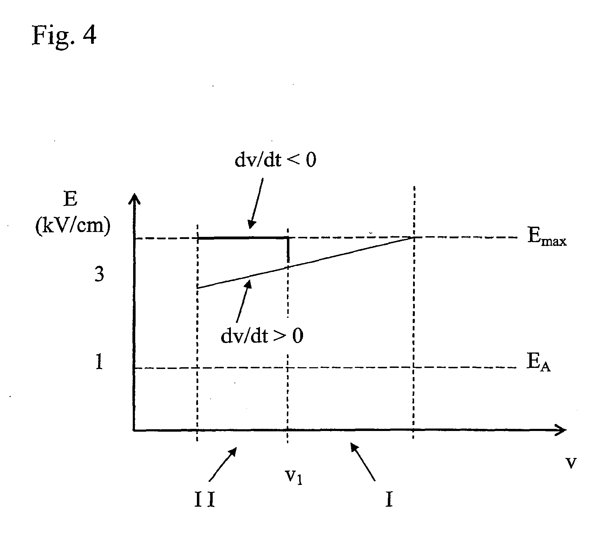

wobei E$_{max}$ die unter den Nebenbedingungen des erlaubten Plasmastroms größtmögliche Feldstärke darstellt. Diese Vorgangsweise wird in der Fig. 4 skizziert, in der die in den Kanälen 5 errichtete, maximale Feldstärke E in Abhängigkeit von der Strömungsgeschwindigkeit v des Abgasstroms im Kanal 5 aufgetragen sind. Zur Vereinfachung ist ein linearer Zusammenhang dargestellt. Zusätzlich ist auch zum Vergleich der Wert E$_A$ eingezeichnet, der derzeit übliche Werte für jene Feldstärke angibt, die notwendig wäre, wenn die Feldstärke E lediglich die Aufgabe des Russabbrandes in den Kanälen 5 zu erfüllen hätte.

Natürlich kann der Prozessor des Russfilters diese Steuerung selbst durchführen. Die erfindungsgemäß einfachste Umsetzung erhält man durch eine Messung des vorzugsweise am Filter selbst auftretenden Differenzdrucks (p$_1$ - p$_2$), der in guter Näherung direkt proportional zu der mittleren Strömungsgeschwindigkeit v in den Kanälen 5 des Wabenkörpers 7 ist.

Dadurch ergibt sich die bevorzugte Umsetzung des Regelprinzips dadurch, dass man den am Filter oder einem anderen entsprechenden Strömungswiderstand auftretenden Differenzdruck (p$_1$ - p$_2$) in mindestens zwei Intervalle teilt, wo für den größeren Differenzdruck die normale Regelgleichung gilt, während für den geringeren Differenzdruck (p$_1$ - p$_2$) nur die normale Regelgleichung gilt, wenn die Ableitung des Differenzdrucks nach der Zeit positiv oder Null ist, also der Differenzdruck mit der Zeit zunimmt oder konstant bleibt; ist dagegen die Ableitung des Differenzdrucks nach der Zeit negativ, nimmt also der Differenzdruck mit der Zeit ab, so wird das Feld E mit dem höchsten, unter den Nebenbedingungen des Plasmastroms und der Gastemperatur erlaubten Wert E$_{max}$ gefahren:

**Intervall I:**

**(p$_1$ - p$_2$) > $\Delta$p$_1$** Regelgleichung lautet :

$$E(T) = h.V(T) / q.L.\kappa(D,T).z(D)$$

**Intervall II:**

**(p$_1$ - p$_2$) < $\Delta$p$_1$**
Regelgleichung lautet bei **d(p$_1$ - p$_2$) /dt $\geq$ 0** ebenfalls

$$E(T) = h.V(T) / q.L.\kappa(d,T).z(d)$$

**(p$_1$ - p$_2$) < $\Delta$p$_1$**
Regelgleichung lautet bei **d(p$_1$ - p$_2$) /dt < 0** dagegen

$$E(T) = E_{max}$$

Natürlich kann erfindungsgemäß auch der Filterprozessor selbst die zur optimalen Abscheidung des Rußes notwendige Spannungssteuerung berechnen und durchführen, wenn der Motorprozessor die dazu notwendigen Signale, vorzugsweise Temperatur, Gasvolumenstrom oder Massenstrom, vorzugsweise auch AGR-Rate und Einspritzmenge über ein Signalsystem, vorzugsweise über CANBUS, zur Verfügung stellt. Ein weiterer Vorteil besteht dabei dadurch, dass der kleinere Filterprozessor schneller die notwendigen Spannungsänderungen ermittelt, und dadurch das durch Kapazitäten auf der Hochspannungsseite nur langsam regelbare Abscheidefeld E rechtzeitig auf den neuen Russanfall einstellen kann.

Nachdem das Plasma im Filter ohnehin durch einen Mikroprozessor in Abhängigkeit von Temperatur, Restsauerstoff und vorzugsweise auch Feuchte und Russmenge geregelt wird, ist es von Vorteil, wenn dieser Prozessor auch Menge und Verteilung des abgelagerten Rußes berechnet, und danach das Abscheidefeld E und insbesondere die zeitliche Aufteilung zwischen Ablagerungsfeldfeldstärke E(T) und Regenerationsfeldstärke $E_{max}$ regelt. Obwohl die Information hierfür durch filtereigene Sensoren, als auch durch filtereigene Analyse der Strom-Spannungskennlinien i = i(U) und Differenzdrücke ($p_1 - p_2$) ermittelt werden kann, ist es besonders vorteilhaft, wenn aus dem Prozessor der Motorsteuerung vorzugsweise über einen CANBUS entsprechende Daten wie Abgasmassenstrom, Einspritzmenge, AGR-Rate, Restsauerstoff und Russemission dem Filterprozessor zugeleitet werden.

Diese bevorzugte Verfahrensweise für den Betrieb der Filteranordnung im Niedriglastbereich kann erfindungsgemäß weiter modifiziert werden, indem die zu seiner Umsetzung notwendige Vorrichtung in einer zweiflutigen Ausführung des Filters besteht, wobei im unteren Leistungsbereich nur ein Teilfilter mit dem Abgas beaufschlagt wird. Bei wiederholt hohem, aber kurzem Russanfall bei kaltem Motor (so genannter "Hausfrauenzyklus") kann vorzugsweise zwischen beiden Teilfiltern hin- und hergeschaltet werden, um den Ruß im jeweils abgeschaltetem System bei höherem Feld zu regenerieren, und im mit dem Abgasstrom beaufschlagten Teilfilter bei vorzugsweise niedrigerem Feld über den ganzen Filter verteilt zu sammeln.

Da der offene Filter ganz besonders dazu prädestiniert ist, am Ende des Abgasstranges angeordnet zu werden, ist er vor allem das System der Wahl, wenn weitere, motornahe Systeme zur Abgasnachbehandlung, etwa SCR-Systeme wie "AdBlue", eingebaut werden müssen. Bei der Verwendung von AdBlue etwa wird eine Lösung von 32,5 % Harnstoff in Wasser eingesetzt, die bei ca. -11°C zu kristallisieren beginnt, und sich ab ca. +23 °C zersetzt. Harnstoff ($H_2N-CO-NH_2$) hydrolysiert zu 2 Molekülen Ammoniak (NH3) und 1 Molekül Kohlendioxid, wobei letzteres auch hinsichtlich der $CO_2$-Emission problematisch ist. Diese Systeme sind für den unter einem hohen elektrischen Feld E stehenden Wabenkörper 7 nicht ganz unkritisch, da ein zu großer "Schlupf" der eingedüsten wässrigen Ammoniaklösung oder eine durch intermittierende Eindüsung ausgelöste, kurzzeitige Überdosierung, die insbesondere in der Kaltphase auftreten kann, zur Freisetzung von Elektrolyten führt, die den Widerstand des keramischen Wabenkörpers 7 sowie auch die Gasentladung für die Aufladung der Russteilchen vor dem Wabenkörper 7 stören kann.

Alle diese Elektrolyte zersetzen sich oder verdampfen bei Temperaturen von 100°C bis 280°C, aber es genügt eine durch die notwendige Zersetzungszeit gegebene Gleichgewichtskonzentration, um Störungen im Plasma hervorzurufen. Die nachstehende Tabelle 3 zeigt, dass eine größere Anzahl starker Elektrolyte wie Salpetersäure und Schwefelsäure gebildet werden können:

Tabelle 3:

| | |
|---|---|
| $CO_2 + H_2O \rightarrow \underline{H_2CO_3}$ | Produkt zersetzt sich thermisch (< 100°C); keine stabilen Salze |
| $2 NO_2 + H_2O \rightarrow \underline{HNO_3}$ | MP: ca. 10 °C; BP: ca. 280 °C; Azeotrop bei 330°C; |
| $N_2O_4 + H_2O \rightarrow \underline{HNO_3}$ | Nitrate zersetzen sich thermisch |
| $2NO + H_2O \rightarrow 2\underline{HNO_2}$ | Produkt zersetzt sich thermisch; keine stabilen Salze |
| $2SO_2 + O_2 \rightarrow 2SO_3$<br>$SO_3 + H_2O \rightarrow \underline{H_2SO_4}$ | MP: ca. -42 °C; BP: ca. 86 °C; Azeotrop bei 120 °C stabile Salze (Motorölaschen, Abrieb) (NH4)2SO4 (Salz mit Ammoniak) ist fest und zerfällt |

(fortgesetzt)

| | thermisch bei 235 - 280°C |
|---|---|
| SO2 + H2O → H2SO3 | Produkt zersetzt sich thermisch (< 100°C); Salze nicht thermisch stabil |
| NH3 | liegt immer gasförmig vor |

In diesem Falle sind Maßnahmen vorgesehen, die von einem kurzzeitigen Eingriff in die Regelparameter des Pulsfeldplasmas bis zu einer vorübergehenden Stilllegung der Filterfunktion reichen können. Dazu ist es sehr nützlich, dass der Regelelektronik des Filter-Prozessors Signale, vorzugsweise über CANBUS, zugeleitet werden, die von dem Motorrechner oder der entsprechenden Steuereinheit des Systems zur "AdBlue"-Eindüsung stammen, und die Zeitpunkte und vorzugsweise auch die Eindüsungsmenge in das SCR-System angeben.

Für größere Fehlfunktionen des SCR-Systems oder ähnlicher Nachbehandlungseinrichtungen kann eine Beschädigung des hochspannungsführenden Filters dadurch verhindert werden, dass eine vorübergehende Umleitung des Abgases vorgenommen wird, vorzugsweise in einen "standby"-geschalteten, kleinen Wall-flow-filter, der für diese seltenen und kurzzeitigen Beaufschlagungen keine eigene Regeneration braucht. Des Weiteren kann auch die Filtersteuerung selbst entscheiden, wenn der Elektrolytgehalt des Abgases für den Filter nicht mehr akzeptabel ist und diese Umleitung auslösen, wobei vorzugsweise auch an die Motorsteuerung oder an die Steuerung des "AdBlue"-Systems ein Signal gesendet werden kann, dass der "Schlupf" des Systems inakzeptabel hoch ist.

Somit wird ein optimiertes Verfahren für den Betrieb einer Filteranordnung zur Abscheidung von Russpartikel aus einem Abgasstrom von Verbrennungskraftmaschinen bereitgestellt, und hierfür verbesserte, strukturelle Ausführungen der Filteranordnung geliefert. Insbesondere werden eine für eine möglichst hohe Abscheidung von Russpartikel optimale Wahl des am Wabenkörper 7 anliegenden, elektrischen Feldes, sowie für die Höhe h der Kanäle 5 eines solchen Wabenkörpers 7 in Abhängigkeit von der Wandstärke d und der Kanalbreite b vorgeschlagen, und zwar bei möglichst kleinem Gesamtquerschnitt Q des Wabenkörpers 7, da eine Montage unter dem Fahrzeug, gegebenenfalls auch im Zuge einer Nachrüstung, möglich sein sollte.

**Patentansprüche**

1. Verfahren für den Betrieb einer Filteranordnung zur Abscheidung von Russpartikel aus einem Abgasstrom, bei dem der Abgasstrom durch axial verlaufende, beidseitig offene Kanäle (5) eines aus einem keramischen Werkstoff hergestellten Wabenfilters (7) hindurchgeleitet wird, wobei an parallel zu den Kanälen (5) verlaufenden Elektroden (1,2) eine Spannung an den Wabenfilter (7) zur Erzeugung eines elektrischen Feldes (E) in den Kanälen (5) des Wabenfilter (7), das im Wesentlichen normal zur Achse der Kanäle (5) orientiert ist, angelegt wird, und vor dem Einleiten des Abgasstroms in die Kanäle (5) des Wabenfilters (7) eine Aufladung der Russpartikel mithilfe einer weiteren Elektrodenanordnung erfolgt, **dadurch gekennzeichnet, dass** es sich bei jener Spannung, die an den parallel zu den Kanälen (5) verlaufenden Elektroden (1,2) angelegt wird, um unipolare Spannungsimpulse handelt, wobei die unipolaren Spannungsimpulse so gewählt werden, dass bei vorgegebener Kanalhöhe (h) in Feldrichtung und vorgegebener Kanallänge (L) das Verhältnis der durch die Spannungsimpulse erzeugten Driftgeschwindigkeit (c) der aufgeladenen Russpartikel in Feldrichtung des in den Kanälen (5) erzeugten, elektrischen Feldes zur Kanalhöhe (h) größer oder gleich dem Verhältnis der mittleren Strömungsgeschwindigkeit (v) der Gasströmung in den Kanälen (5) zur Kanallänge (L) ist.

2. Verfahren nach Anspruch 1, **dadurch gekennzeichnet, dass** die Bestimmung der durch die Spannungsimpulse erzeugten Driftgeschwindigkeit (c) der aufgeladenen Russpartikel anhand jener Russpartikel mit Durchmessern über 1$\mu$m vorgenommen wird.

3. Verfahren nach Anspruch 1, **dadurch gekennzeichnet, dass** die Bestimmung der durch die Spannungsimpulse erzeugten Driftgeschwindigkeit (c) der aufgeladenen Russpartikel anhand jener Russpartikel mit Durchmessern größer oder gleich 10$\mu$m vorgenommen wird.

4. Verfahren nach einem der Ansprüche 1 bis 3, **dadurch gekennzeichnet, dass** der Differenzdruck des Abgasstromes am Wabenfilter (7) gemessen wird, und oberhalb eines vorgegebenen Wertes ($\Delta p_1$) des Differenzdrucks die Regelung der unipolaren Spannungsimpulse in Abhängigkeit von der Strömungsgeschwindigkeit (v) des Abgasstroms in den Kanälen (5) des Wabenfilter (7) erfolgt, und unterhalb dieses vorgegebenen Wertes ($\Delta p_1$) die Regelung

nur dann in Abhängigkeit von der Strömungsgeschwindigkeit des Abgasstroms in den Kanälen (5) des Wabenfilters (7) erfolgt, wenn die Strömungsgeschwindigkeit (v) eine mit der Zeit zunehmende Tendenz aufweist, und andernfalls die Regelung unabhängig von der Strömungsgeschwindigkeit (v) erfolgt.

5. Filteranordnung zur Durchführung des Verfahrens nach einem der Ansprüche 1 bis 4 mit einem aus einem keramischen Werkstoff hergestellten Wabenfilter (7), der axial verlaufende Kanäle (5) aufweist, die vom Abgas durchströmt werden, und am Wabenfilter (7) parallel zu den Kanälen (5) verlaufende Elektroden (1,2) zur Erzeugung eines normal zu den Kanälen (5) verlaufenden, elektrischen Feldes in den Kanälen (5) angeordnet sind, wobei die Kanäle (5) einen rechteckförmigen Querschnitt mit einer Kanalhöhe (h) in Feldrichtung des in den Kanälen (5) erzeugten, elektrischen Feldes, und einer Kanalbreite (b) aufweisen, und die Kanäle (5) in Feldrichtung durch eine Wandstärke (d) voneinander getrennt sind, **dadurch gekennzeichnet, dass** die Kanalhöhe (h) größer oder gleich dem Produkt aus der Wandstärke (d) und der Quadratwurzel aus dem Verhältnis von Kanalhöhe (h) zu Kanalbreite (b) ist, aber kleiner oder gleich der Summe aus diesem Produkt und der zweifachen Wandstärke (d).

6. Filteranordnung nach Anspruch 5, **dadurch gekennzeichnet, dass** das Verhältnis von Kanalhöhe (h) zu Kanalbreite (b) zwischen 0.14 und 1.0 beträgt.

7. Filteranordnung nach Anspruch 6, **dadurch gekennzeichnet, dass** das Verhältnis von Kanalhöhe (h) zu Kanalbreite (b) zwischen 0.20 und 0.50 beträgt.

8. Filteranordnung nach einem der Ansprüche 5 bis 7, **dadurch gekennzeichnet, dass** die Kanalhöhe (h) zwischen 0.20 mm und 0.80 mm beträgt..

9. Filteranordnung nach Anspruch 8, **dadurch gekennzeichnet, dass** die Kanalhöhe (h) zwischen 0.40 mm und 0.60 mm beträgt.

*Fig. 1*

*Fig. 2*

Fig. 3

16

Fig. 4